# EUROPEAN PATENT SPECIFICATION

(11) **EP 0 842 331 B1**
(45) Date of publication and mention of the grant of the patent: **25.06.2003**
(21) Application number: 97921236.2
(22) Date of filing: 17.04.1997
(51) Int. Cl.: E02F 5/22, E02F 5/10, H02G 9/02

(54) **METHOD AND APPARATUS FOR BACKFILLING PADDED UNDERGROUND STRUCTURES**
VERFAHREN UND VORRICHTUNG ZUM FÜLLEN VON GRÄBEN MIT DARIN GEPOLSTERT LIEGENDEN UNTERGRUNDSTRUKTUREN
PROCEDE ET SYSTEME POR LE REMBLAYAGE DE STRUCTURES COMPRESSEES ENFOUIES

(30) Priority: 01.05.1996 US 637928; 25.06.1996 US 672326
(43) Date of publication of application: 20.05.1998
(73) Proprietor: Klaymar, Edward, J., Indiana, PA 15701 (US)
(72) Inventor: Klaymar, Edward, J., Indiana, PA 15701 (US)
(74) Representative: McKelvey, Ian Edward
(86) International application number: US9706405
(87) International publication number: WO97041313

(56) References cited:
- EP-A- 0 251 876
- EP-A- 0 546 934
- DD-A- 214 033
- FR-A- 2 714 920
- GB-A- 410 900
- GB-A- 2 225 240
- US-A- 4 912 862

## Description

The present invention relates to a method and apparatus to stabilize the backfill of ditches containing a pipeline, cable or other structure surrounded by sand or other padding material to prevent rocks or other larger particles from encroaching upon the padding material which surrounds the pipe.

### 2. Description of the Prior Art

Steel pipelines are used for transporting fluids, such as gas or oil, over a long distance, and it is common practice to bury the pipelines underground. Typically, top soil is stripped away and reserved for reapplication after the trench is backfilled. A trench is dug to a depth which allows 3 feet (10.97 m) of cover over the pipe and 6 inches (15.24 cm) of space under the pipe. Subsoil removed from the trench is piled near the trench for later use as backfill material.

The pipe is laid on supports which hold the pipe generally six (6) inches (15.24 cm) above the trench floor. These supports can be sand bag piles or foam blocks spaced every 12 feet (3.66 m) or so, or on a continuous bed of rock free soil. The pipe is then covered with rock free dirt called padding so that the padding material surrounds the pipe a minimum of 6 inches (15.24 cm) under, over and beside the pipe. Typically, the padding material is sand or subsoil with a particle size having a diameter not larger than 1 1/2 inches (3.81 cm). Some specifications call for a maximum diameter of 1 inch (2.54 cm) or 1/2 inch (1.27 cm). The industry term for this construction step is "Pipeline Padding."

In fairly low rock content areas pipeline padding can be accomplished with a backhoe operator virtually selecting dirt without rocks and gradually pulling it into the trench. In more rocky areas sand or screened dirt must be purchased and hauled to the right-of-way or produced on-site by pipeline padding machines. Padding machines are specifically designed portable screening machines which process the excavated spoil or right-of-way subsoil to produce and place padding material over the newly laid pipe. After the padding has been applied the remaining rock and subsoil spoil are then reintroduced into the trench.

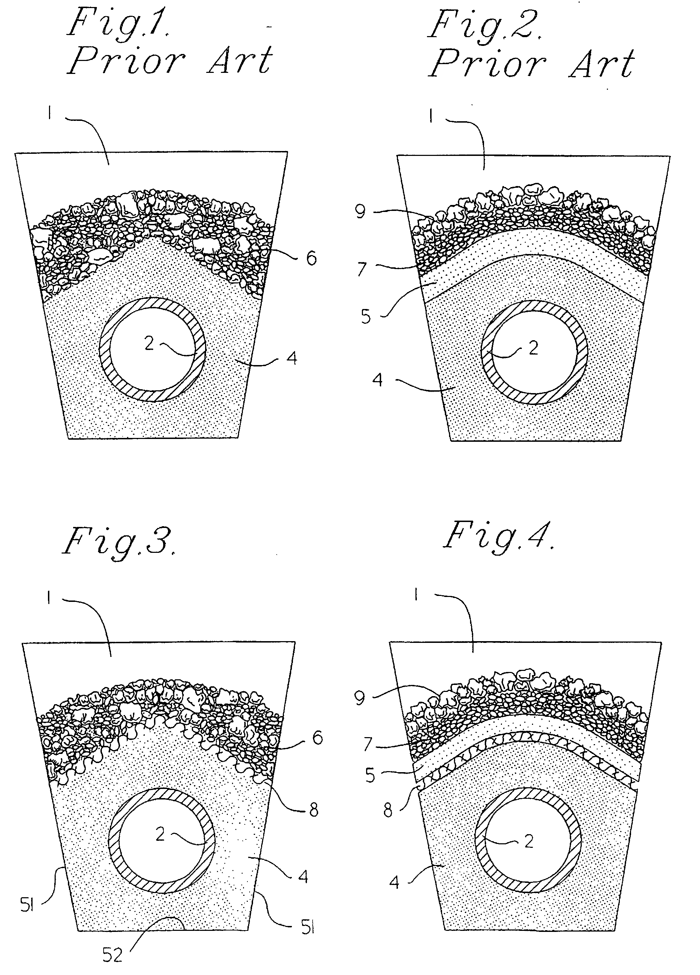

Figure 1 shows a cross-section of a trench 1 backfilled according to one prior method. The pipeline 2 is surrounded by padding material 4. Typically this padding material will have been screened from soil dug from the trench. The remaining soil 6 is deposited over the padding material to completely backfill the trench.

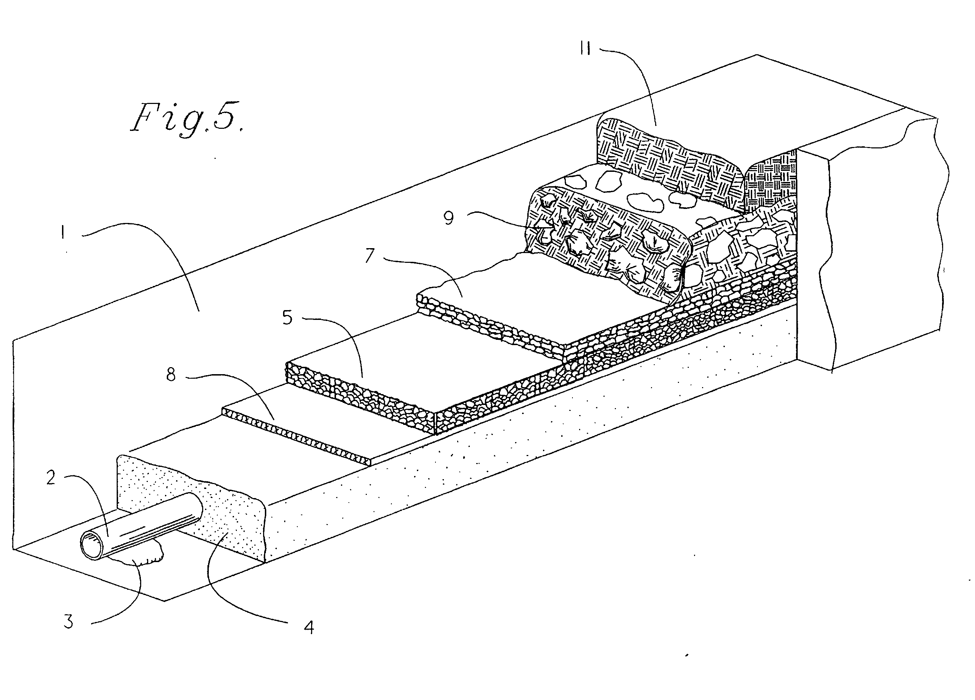

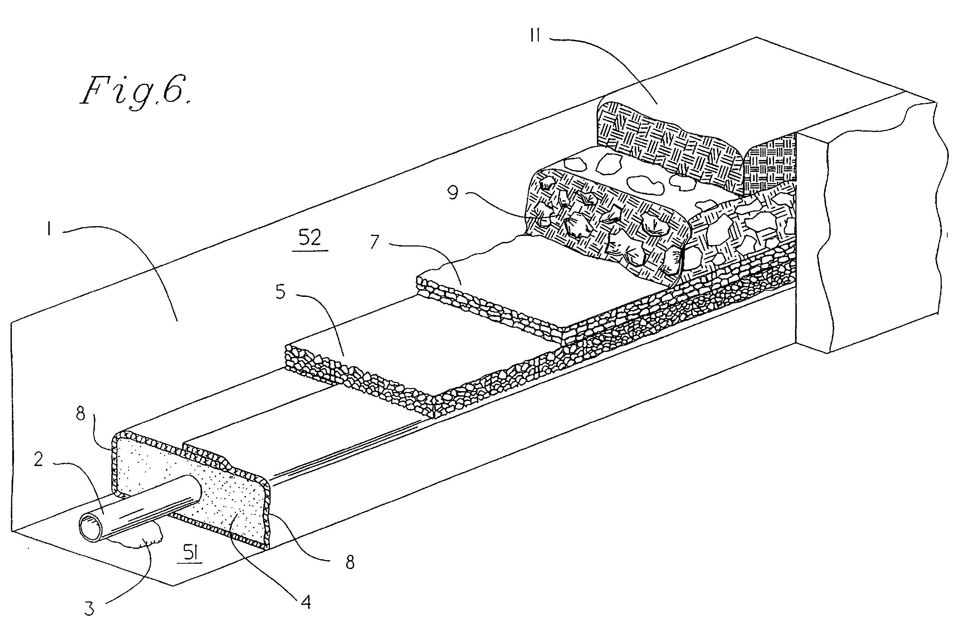

A second prior art backfill method is illustrated by the trench cross-section of Figure 2. In this method the soil removed from the trench is run through multiple screens. The final screening creates the padding material 4 which typically contains subsoil having particles sized up to 5/8 inches (1.59 cm) nominal in diameter. Intermediate screenings provide intermediate layers 5, 7 and 9. Layer 5 contains 5/8" to 1 1/2" (1.59cm to 3.81 cm) stone. Layer 7 contains 1 1/2" to 5" (3.81 cm to 12.70 cm) stone. Layer 9 contains 5" plus (over 12.70 cm) rocks produced by the multiple screened device and the remaining rock and subsoil spoil backfilled into the trench. Layers 5 and 7 form a non-compactable barrier between the padding material 4 and the larger rock and subsoil mixture 9. In many areas a layer of topsoil 11 shown in Figures 5 and 6 is placed over the backfill to completely fill the trench.

The screening and backfilling of soil into the trench are often done by pipeline padding machines. This backfilling device usually includes a storage hopper or similar compartment for receiving the backfill material, a continuous conveyor and a system of vibrating screens for sorting the backfill material. The components within the backfilling device are supported by a mainframe which is carried above the ditch to be backfilled. A support arm rigidly locks the backfilling device with a tractor or other means of locomotion. The backfilling device is configured to backfill the ditch with various layers of different sized backfill material in a single pass. One such backfilling device is described in United States Patent No. 4,955,756.

The major problem facing owners and users of underground pipelines is corrosion. Corrosion is an electrochemical process, requiring an anode and a cathode electrically connected in an electrolyte. Corrosion is a self-poisoning process, and in order for it to continue over a long period of time, a mechanical or chemical means for depolarization or depassivation must exist. Interference with any one of these requirements will reduce the corrosion rate.

A widely used method of protecting pipes is the use of coating materials including tape, plastic, enamel, epoxy and urethane paint. The coatings separate the anode and cathode or isolate the electrolyte from the metal as long as the coating is free of defects.

In addition to the coatings it is known practice to use cathodic protection for the protection of metals buried underground. Present pipeline designs frequently include cathodic protection in accordance with the known technology which is effected by connecting the surface of the steel pipe either to a buried sacrificial anode or to an impressed current source. Cathodic protection is useful in preventing localized erosion of scratched and chipped pipe. However, cathodic protection is unable to protect from corrosion caused by water migration under the protective coating where the protective coating acts as an insulator. If the coating separates from the pipe, water may migrate under the coating and set up a corrosion cell using the coating as a shield against the cathodic protection. Furthermore, cathodic protection is expensive and typically is performed throughout the useful life of the pipeline.

Pipeline owners have developed techniques to observe underground pipelines in use. Some methods enable pipeline owners to see changes in pipeline wall thickness caused by localized corrosion. If the pipe is sufficiently corroded so that the wall thickness becomes too thin, the pipeline must be replaced. Because replacement of underground pipelines is expensive, pipeline owners have continued to search for better ways to prevent corrosion. Most of this effort has been directed to developing improved alloys, coatings and cathodic protection systems. Little attention has been paid to preventing damage to coatings during pipeline installations. Prior to the present invention the art has ignored the chipping and scratching of pipeline coatings which occurs after installation.

Obviously scratching and chipping of the pipeline can occur during pipeline handling on installation. A second less obvious method of scratching and chipping involves migration of rocks into the padding layer.

Rocks can and do break into the padding and damage the pipe coating during backfill using the method which results in the backfilled trench of Figure 1. After construction the padding layer provides only minimal support for point loads allowing rocks to move down into the padding layer and reach the pipe. This movement can occur during periods when standing water accumulates in the bottom of the trench. The water can mix with the padding material to an extent where the padding layer completely loses its ability to support the overhead rocks. In this condition the padding material and the overhead rocks change positions and the pipe becomes surrounded by rocks. Further movement of the rocks against the pipe chips or cracks the protective coatings resulting in corrosion. Thus, there is a need for a backfill method which creates a backfill trench in which rocks are prevented from entering the padding layer. Preferably this method can be practiced using existing pipeline padding machines as well as in less rocky areas where padding can be accomplished by selective backfill.

Rocks cannot break into the padding layer 4 during backfill using the method which results in the backfilled trench of Figure 2. Layers 5 and 7, which form a non-compactable barrier of sized stone prohibit point loads from acting on the top surface of the padding layer 4. After construction, however, excess water in the backfilled trench will allow the padding material 4 and the non-compactable layers 5 and 7 to gradually mix until at some point rocks could enter the padding layer 4.

There are a class of materials known as geotextiles which are used primarily in roadway construction for erosion control. These materials allow subsurface water to pass while preventing adjacent soil from migrating past the geotextile layer. Light and medium weight nonwoven geotextiles placed over or around a drainage layer of large stone and rocks allow subsurface water to flow into the drainage core while preventing adjacent soil from clogging the drainage system. Geotextiles are placed over railroad beds to prevent fouling of ballast beneath railway track. Geotextile layers have also been placed around layers of soil to create retaining walls and to allow slopes to be safely steeped. Geotextiles as well as other types of sheet materials such as polyethylene sheets and bentonite clay liners are also used in landfills. The art, however, has failed to recognize that geotextiles could be used in pipeline trenches to prevent rock migration into the padding layer.

In United States Patent No. 5,176,025 Nicholas Butts discloses a pipeline system for preventing, detecting and containing leakage from subterranean pipeline transporting hydrocarbon liquids and gases. This system is designed to both prevent corrosion and contain any liquids or gases that leak from the pipeline. In Butts' system steel pipe is wrapped with a geotextile material impregnated with hydrated lime. That wrapper is completely covered by a protective, water impermeable layer of high density polyethylene (HDPE) sheet. Each sheet of HDPE is welded to the adjacent sheet forming a continuous impermeable sleeve around the pipe. Should the sleeve break and water permeate the sleeve the lime impregnated geotextile layer dissolves creating a highly alkaline solution providing the electric potential for cathodic protection. Since water causes the geotextile used by Butts to dissolve that geotextile offers no protection against rock migration resulting from water in the trench.

Geotextiles have also been proposed for use in swamp weights as an alternative to concrete swamp weights for resisting buoyant forces acting on pipelines crossing water inundated terrain or organics. After the pipeline has been lowered into the ditch, a woven geotextile fabric is placed at designed intervals along the ditch. The fabric is draped down one ditch wall, placed across the ditch bottom, over the top of the pipe, and then draped up the other ditch wall. The backfill, consisting of either native ditch spoil material, a mixture of native and imported material, or entirely imported material, is then placed over the pipe in the normal manner. In this system the geotextile does not run the full length of the trench nor does it stabilize the backfill profile to prevent migration of rocks.

Underground pipes have also been wrapped with polyethylene webbing to protect the pipe from rocks and other debris. This material, called rock shield, usually consists of extruded plastic although geotextile fabric is sometimes used. Rock shield is utilized as a second coating layer wrapped around the pipe. In this system the geotextile does not stabilize the backfill to prevent rocks from entering or mixing with the padding material.

Buried fiber optic, telephone and electrical cables as well as underground storage tanks and other buried structures are often padded with sand and covered with subsoil in the same manner as underground pipelines. Buried electrical service lines are commonly enclosed in a polyethylene wrapping. Television and other communications cables are constructed with a polyethylene outer layer. Movement of rocks against the outer surface of these cables can remove insulation, bend and even break these cables. Indeed, some electric utilities have reported rock damage to the outer layers of buried electrical cables. DD-A-214033 describes a concrete structure having channels running therethrough to house and protect cables from rock movement. The structure is placed in a trench and then a textile fleece is placed directly over the top of the structure presumably to enable quick location and recognition of the concrete cable housing during subsequent site excavation or when cable repair are required. The concrete structure and fleece are surrounded by a backfill of uniform grade.

Buried storage tanks and other metal structures can be damaged by underground rock movement in the same manner as underground pipes. Therefore, any backfill method and device which protects underground pipelines, may also be suitable for protecting buried cable and other structures.

### SUMMARY OF THE INVENTION

I provide a method of filling a trench after a structure has been placed in the trench and a padding material has been deposited around the structure, the padding material being a subsoil containing stones having a diameter of not more than 0.0381m (1 1/2 inches) and filling only a portion of the trench characterized by:
a. applying a sheet of geotextile material over the padding material, which sheet permits water to pass through the sheet while preventing passage of solids; and
b. applying spoil over the sheet to backfill the trench. The geotextile prevents rocks from mixing with the padding material.

I also provide a further method of filling a trench comprising the steps of:
a. draping a sheet of geotextile material over the sides and bottom of the trench, which sheet permits water to pass through the sheet while preventing passage of solids;
b. placing a structure within the trench;
c. depositing a padding material around the structure, the padding material being a subsoil containing stones having a diameter of not more than 0.0381m (1 1/2 inches) and filling only a portion of the trench;
d. folding the sides of the sheet over the padding material; and
e. applying spoil over the sheet to backfill the trench.

I further provide an apparatus for use in carrying out the first mentioned method for placing a geotextile material over padding material surrounding a structure in a trench characterized by:
a. a frame sized and configured to be attached to a carrier which moves along one side of the trench holding at least a portion of the frame over the trench;
b. a supply of geotextile material which permits water to pass through the geotextile material while preventing the passage of solids, the supply being on the frame; and
c. a spreader extending from the frame and under which the geotextile material passes as the geotextile material is placed in the trench.

Other objects and advantages of my backfill method and improved padding machine will become apparent from a description of certain present preferred embodiments thereof shown in the drawings.

### BRIEF DESCRIPTION OF THE FIGURES

Figure 1 is a cross-sectional view of a trench containing a pipeline backfilled according to one prior art method.
Figure 2 is a cross-sectional view of a trench containing a pipeline backfilled in accordance with a second prior art method.
Figure 3 is a cross-sectional view of a pipeline in a trench which has been backfilled according to a first present preferred embodiment of my backfill method.
Figure 4 is a cross-sectional view of a trench containing a pipeline backfilled according to a second preferred embodiment of my backfill method.
Figure 5 is perspective view of a trench containing a pipeline backfilled in accordance with the second preferred backfill method.
Figure 6 is a perspective view similar to Figure 5 illustrating a pipe backfilled in accordance with a third present preferred backfill method.
Figure 7 is a side view of a present preferred embodiment of my improved padding machine.
Figure 8 is a perspective view of a portion of a padding machine illustrating a second preferred embodiment of my improved padding machine.
Figure 9 is an end view of an apparatus for applying geotextile material over the padding material which can be carried by a tractor or other mobile carrier.
Figure 10 is a side view of the apparatus shown in Figure 9.
Figure 11 is a cross-sectional view similar to Figure 3 of a fiber optic cable which has been backfilled according to the first present preferred embodiment of my backfill method.
Figure 12 is a side view of an underground storage tank which has been backfilled according to the second present preferred embodiment of my backfill method.
Figure 13 is a perspective view of a portion of a second preferred embodiment of my apparatus for applying geotextile material over the padding material.
Figure 14 is a side view of the apparatus shown in Figure 13 as padding material is being applied.
Figure 15 is a side view similar to Figure 14 of a third preferred embodiment of a portion of my apparatus for applying geotextile material over the padding material.

### DESCRIPTION OF THE PREFERRED EMBODIMENTS

The first present preferred embodiment of my method is based upon the prior art practice of Figure 1. Referring to Figure 3, a pipeline 2 is placed in a ditch or trench 1 and covered with padding material 4. A geotextile material 8 is placed over the padding material and generally extends from one side of the ditch to the other. I prefer to use woven rather than nonwoven geotextile material. Backfill containing a random mixture of rock and subsoil 6, often called spoil, is then placed on top of the geotextile material. If desired, top soil (not shown) can be placed over the backfill material to complete the filling of the ditch.

Although geotextile material does not provide excellent load bearing capabilities as it can be torn or ruptured nor does geotextile material have excellent load distribution capabilities it can stabilize the padding material 4 if the backfill spoil 6 contains a low to moderate percentage of larger rocks and provided the backfill spoil 6 is carefully placed on top of the geotextile material 8.

The geotextile material 8 acts as a stabilizing sheet which permits water to pass while preventing the passing of solids, either from the padding material 4 or the backfill spoil 6, provided that the geotextile material 8 is not torn or ruptured. There may be other nondegradable fabrics not generally considered to be geotextiles which could be used as this stabilizing sheet. Consequently, the padding material 4 will maintain its integrity and not be encroached by rocks and there will be no scratching of the pipe after the backfill process has been completed.

A second preferred embodiment of my method is illustrated in Figures 4 and 5. As in the prior art process of Figure 2, a pipe 2 is placed in trench 1 and covered with padding material. The padding material has been created by running the spoil removed from the trench through a series of screens. The material passing through the finest screen is the padding material. Preferably, the padding material will contain particles having a diameter of up to 5/8 nominal inches (1.59 cm). Next, I place a layer of geotextile fabric 8 on top of the padding layer. Then, I place a layer of stone ranging between 5/8 and 1 1/2 inches (1.59 cm and 3.81 cm) in diameter on top of the geotextile material to form layer 5. On top of layer 5 is placed a layer 7 containing stone having diameters from 1 1/2 inches to 5 inches (3.81 cm to 12.70 cm). Finally, layer 9 which contains rock having a diameter greater than 5 inches (12.70 cm) mixed with smaller stone and soil is placed. Preferably, an automated padding machine is used to separate the soil removed from the trench into the various layers 4, 5, 7 and 9. In most installations a layer of top soil 11 will be placed on top of the coarse backfill layer 9. When the pipe is initially placed in the trench it is supported by sandbags 3 or other supports. The sandbags maintain the pipe 2 at some distance above the trench floor to allow padding material to be placed under the pipe. In the installation shown in Figures 4 and 5, layers 5 and 7 form a non-compactable barrier between padding and the rock and soil backfill layer 9. This barrier distributes loads over the top surface of the padding material. The geotextile fabric 8 prevents mixing of the padding material 4 below and the sized stone 5 above. Consequently, the integrity of both the non-compactable barrier and the padding layer 4 is maintained and rock damage to the pipe is prevented.

A third present preferred embodiment of my backfill method is shown in Figure 6. In this embodiment geotextile material 8 is draped down one side of the trench across the bottom and up the opposite side of the trench. Then, the pipe 2 is placed on sandbags 3 in the trench. Padding material 4 is deposited around the pipe. Then that portion of the geotextile fabric 8 extending above the trench is folded over the top of the padding layer 4 as shown. Then, backfill layers 5, 7, 9 and top soil 11 are placed on top of the geotextile fabric. These layers are placed in the same manner as described before in the embodiments of Figures 4 and 5. This embodiment of my backfill method is intended to be used where the trench has been excavated in very unstable subsoil where rocks can break away from the unexcavated trench walls 51 or work upward from the unexcavated trench bottom 52.

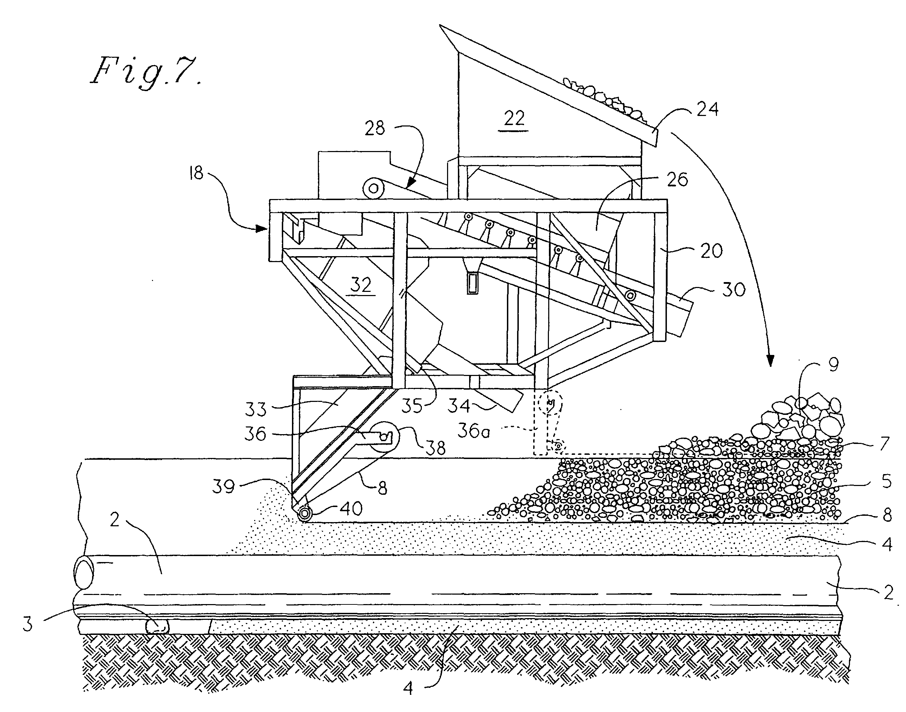

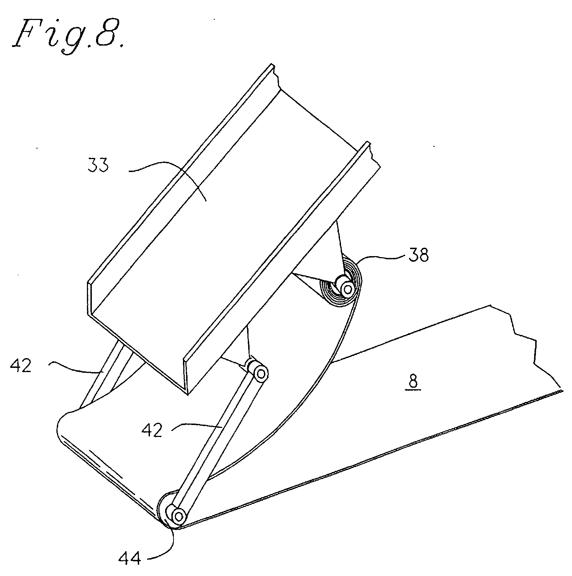

The methods illustrated in Figures 4 and 5 can be practiced using the padding machine shown in Figures 7 and 8. Referring to Figure 7, the padding machine 18 has a frame 20. A hopper 22 having a grizzly 24 is placed on top of the frame. When backfill material is placed on top the grizzly large rocks will fall off forming layer 9. Other material will pass through hopper 22 onto conveyor 28. If the padding machine is of the type described in my United States Patent No. 4,955,756, the conveyor will deliver the material to a double screen within housing 32. Material having a diameter between 1 1/2 and 5 inches (3.81 cm and 12.70 cm) will fall through chute 34. Stones having a diameter between 5/8 inches and 1 1/2 inches (1.59 cm and 3.81 cm) will fall from the bottom edge 35 of housing 32. In an alternative machine having a single screen in housing 32 there is a large screen 26 at the bottom of hopper 22. Material having diameter between 1 1/2 and 5 inches (1.59 cm and 3.81 cm) will fall from the back of screen 26 onto chute 30. That material will drop to form layer 7. Material passing through screen 26 will fall onto conveyor 28. That conveyor moves the material onto screen 32. Stones having a diameter between 5/8 inches and 1 1/2 inches (1.59 cm and 3.81 cm) will not pass through screen 32. Rather, they will fall onto chute 34 and then down to form layer 5. In both types of machines, the fine material having a diameter of 5/8 inches (1.59 cm) or less drops through screen 32 onto chute 33 and into the trench to form the padding material 4.

In the improved padding machine I provide a support 36 on which I place a roll 38 of geotextile material 8. Geotextile material is routed around roller 40 held by bracket 39 and then laid on top of the padding layer 4. Roller 40 also levels the padding layer during placement of the geotextile fabric. Although I prefer to place the geotextile fabric on the padding layer, I have shown an optional support 36a. Using this support the geotextile fabric is placed between layers 5 and 7 as shown in chainline.

In Figure 8 I show an alternative configuration of the padding machine wherein the roll 38 of geotextile fabric 8 is mounted directly on the padding machine frame. A pair of leveling arms 42 having a roller 44 between them extends from chute 33. This arrangement maintains the geotextile fabric on the padding layer as the remaining layers 5, 7 and 9 are deposited.

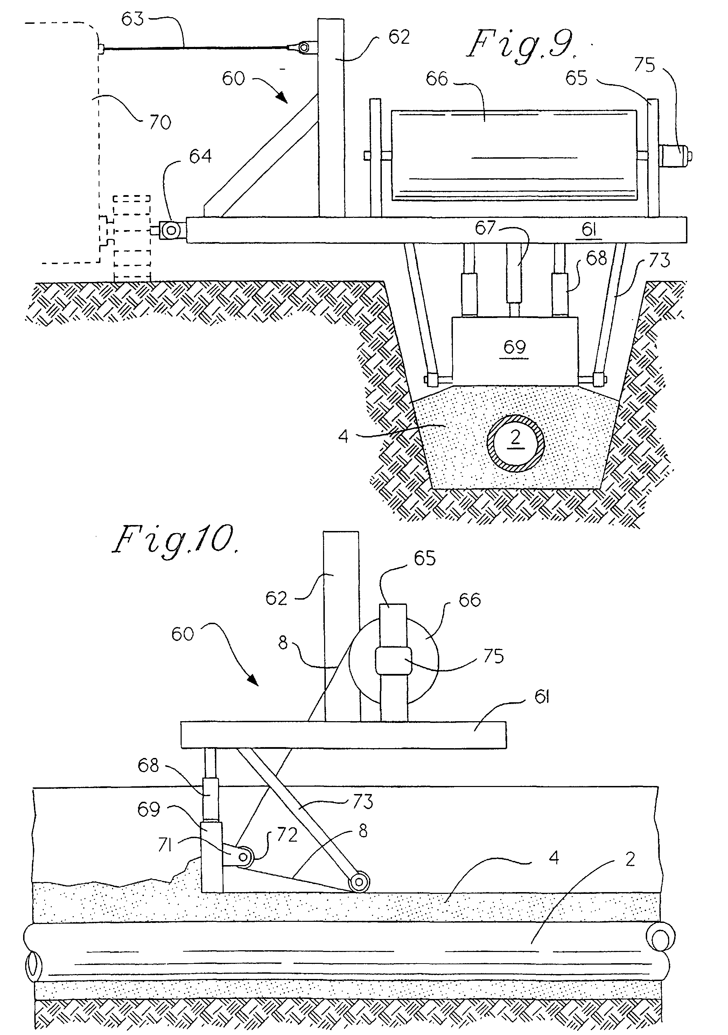

When selective backfilling is done or padding material is imported the geotextile material may be placed in the trench using the apparatus 60 shown in Figures 9 and 10. A rectangular support frame 61 has a mast 62. A cable 63 and clevis 64 are provided to attach the frame 61 to a tractor or other mobile carrier indicated by chainline 70. A roll of geotextile material 66 is carried on rack 65 attached to the top of the frame. I prefer to provide a motor 75 for unrolling the roll of geotextile material. I prefer to provide a padding leveler 69 which is connected to the bottom of the frame by telescoping steel tubing 68. A hydraulic cylinder 67 is provided to adjust the height of the leveler 69. I prefer to provide brackets 71 on the rear of the leveler 69 which holds roller 72. A spreader 73 preferably having a pair of arms with a roller connected between the arms such as is used in the embodiment of Figure 8 extends from the bottom of the frame 61. Geotextile material is fed from roll 66 under roller 72 and spreader 73 onto padding material 4. The leveler 69 assures that at least a portion of the padding material will be at the same level as the spreader to enable even placement of the geotextile material.

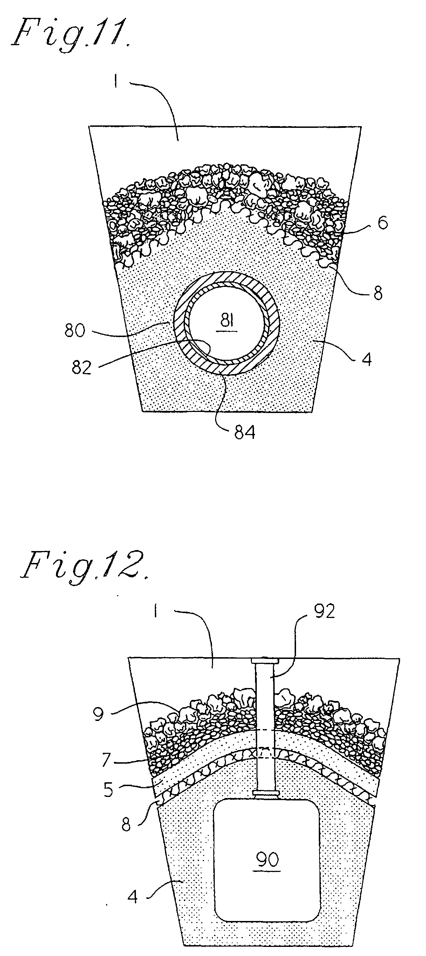

As shown in Figure 11 buried fiber optic cable 80 having a transmissive core 81, reflective layer 82 and protective coating 84 is padded with sand or other padding material 4. A geotextile material 8 is placed over or around the padding material. Then backfill containing soil 6 covers the geotextile materials. If desired, top soil (not shown) can be placed over the backfill material to complete filling of the ditch 1. The geotextile material prevents rock migration from the backfill soil into the padding layer. Consequently, migrating rocks cannot strike the cable 80 and damage the protective coating 84 and reflective layer 82.

An underground storage tank 90 with access pipe 92 shown in Figure 12 is surrounded by a padding material 4. Geotextile material 8 is placed on or around the padding layer. Then the spoil is selectively returned to the trench to create layers 5, 7 and 9 containing stone of progressively larger nominal diameters. Topsoil or concrete (not shown) may be placed over the top layer. As in the embodiment of Figures 4 and 5 the geotextile material prevents mixing of the padding material and the stone above the geotextile material. Furthermore, layers 5, 7 and 9 form a non-compactable barrier. Consequently, rock damage to the storage tank is prevented.

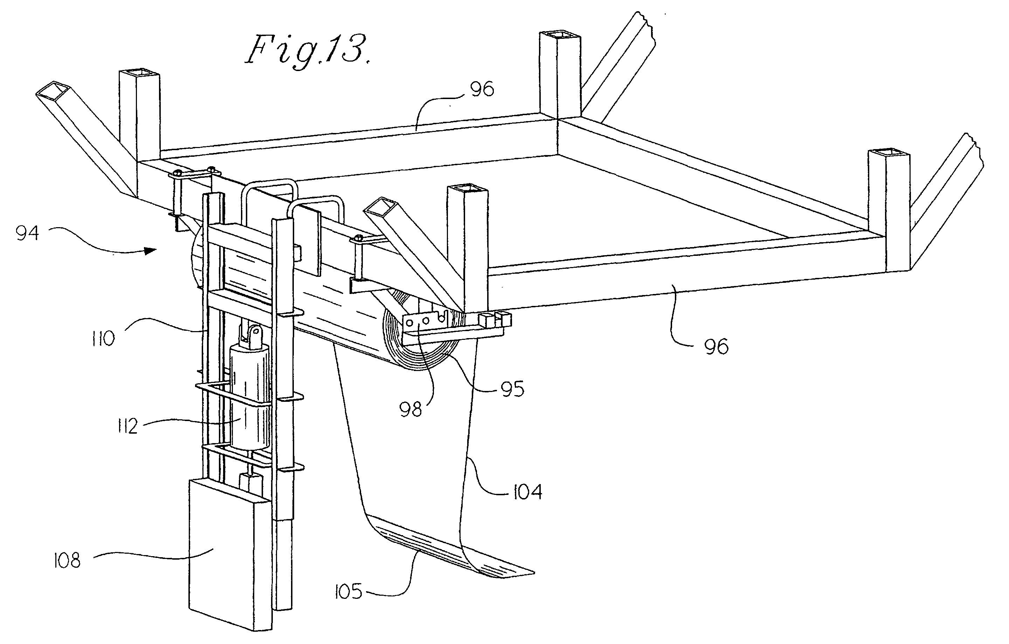

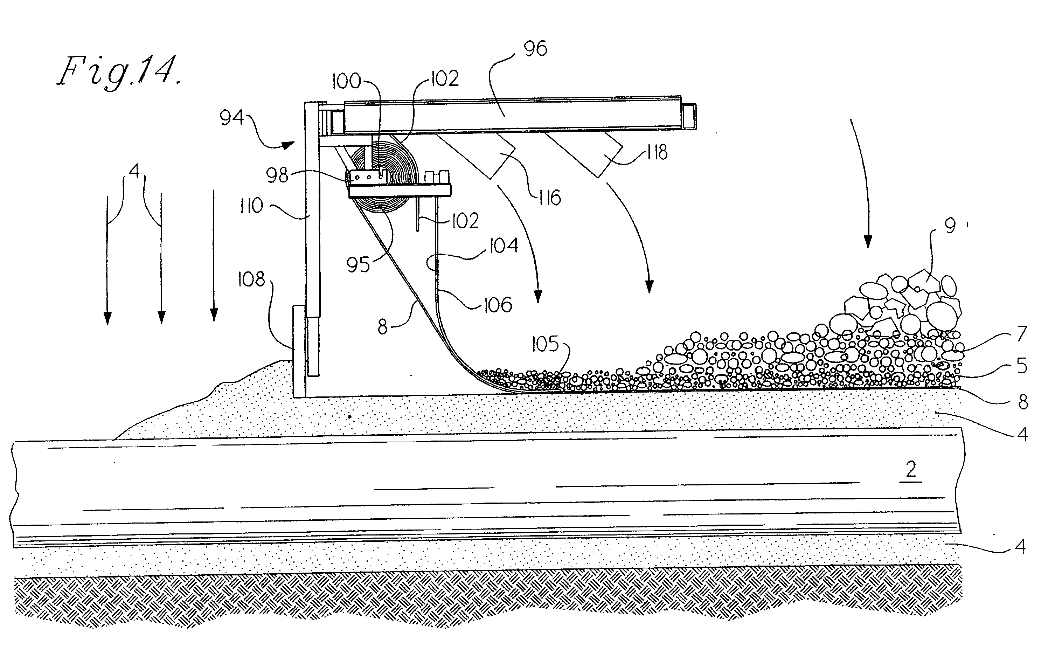

In Figures 13 and 14 I show an alternative configuration of a padding machine 94 wherein a roll of geotextile fabric 95 is mounted so as to hang below the padding machine frame 96. The roll of geotextile fabric is held by fabric roll supports 98 which are provided at each end of a shaft 100. Supports 98 can be adjustable to accept varying widths of geotextile fabric roll 95. Also, the shaft can be provided with bearings (not shown) for ease of unrolling. A tensioner 102 may be provided to control the unrolling of the roll of geotextile material so as to resist unwinding of the roll 95 as the padding machine 94 is pulled by the tractor or other mobile carrier along the trench. This is an alternative to providing a motor for unrolling the roll of geotextile material (Figures 9 and 10). The tensioner could be a bar, roller or flat sheet resting on the roll or a brake acting against the sides or core of the roll. A geotextile spreader/installer 104 can be provided to keep the geotextile fabric 8 spread as it is laid on top of the padding material 4 and to prevent collapsing of the fabric as it is unrolled. This also helps to lay the fabric directly on the padding material as the layer 5 is spread on top of the geotextile fabric. The spreader/installer 104 is preferably made of a strong flexible material such as that used for conveyor belting and having attached on a bottom portion 105 neoprene rubber where the geotextile fabric meets and passes under the spreader. It eliminates the need for the roller 40 shown in Figure 7 which may be damaged or restricted by rocks. As the fabric is unrolled from the geotextile fabric roll 95, it slides underneath the bottom portion 105 of the spreader/installer 104, while the top surface 106 of the spreader/installer prevents all or a portion of the material which forms layer 5 from falling on unsupported geotextile fabric, preventing damage to the fabric. This spreader/installer preferably is wider at the top than at the bottom because trench walls are usually sloped. A top width of 40 inches (101.60 cm) and a bottom width of 30 inches (76.20 cm) can be used. In an alternative embodiment, one end of the spreader/installer 104 may be attached on the shaft 100 so as to provide resistance on the geotextile fabric roll 95 such that it acts as the tensioner 102.

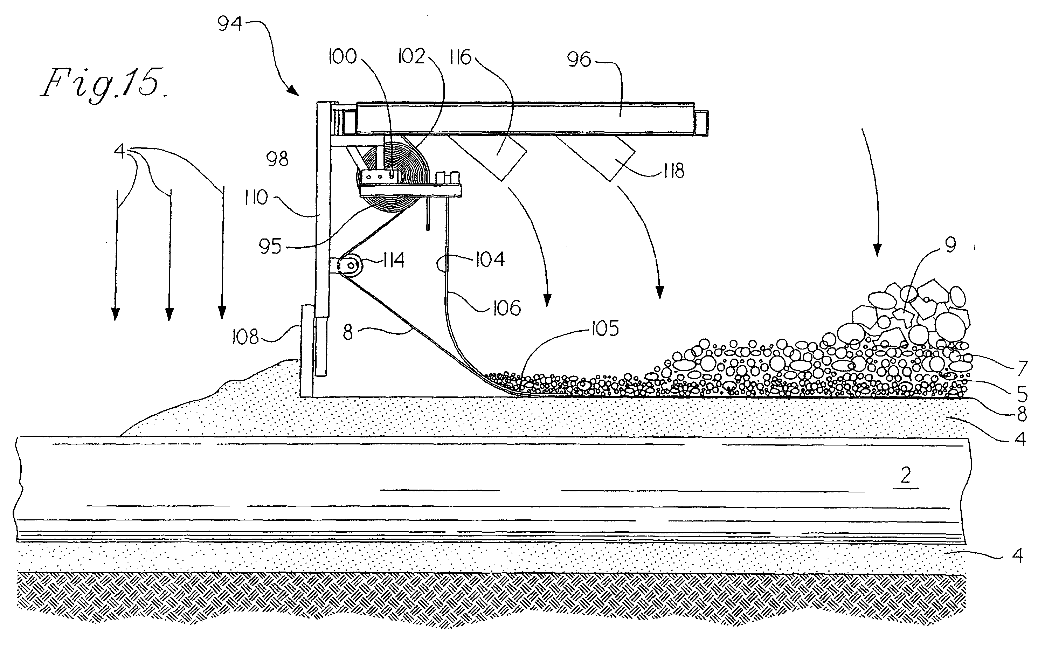

Similar to the apparatus shown in Figure 10, a padding leveler 108 may be connected to the frame 96, such as by telescoping steel tubing 110. A hydraulic cylinder 112 may also be provided to adjust the height of the leveler 108. In the embodiment shown in Figure 15 I also provide a roller 114 for the geotextile fabric positioned well above the padding layer 4. The carrier may be an idler. The geotextile fabric is unrolled from the roll 95 and passes under the carrier 114 and then slides underneath the bottom surface 105 of the spreader/installer 104.

As shown in Figures 14 and 15, the padding machine may also include chutes 116, 118 from the padding machine or other padding material source extend through the frame 96. The chutes deliver the different layers of spoil on top of the geotextile fabric 8 after it is placed over the padding material 4. The padding material is placed over the pipe 2, or other buried structure such as the fiber optic cable 80 or tank 90, and the padding machine 94 is moved in the trench while the leveler 108 levels the padding material. As the geotextile fabric unrolls from the roll, it slides underneath the geotextile fabric spreader. Alternatively it may also pass underneath the idler 114 in Figure 15 prior to sliding underneath the spreader/installer. Material having a diameter between 5/8 inches and 1 1/2 inches (1.59 cm and 3.81 cm) will fall from the first chute 116 onto the geotextile fabric 8 to form layer 5. Material having a diameter between 1 1/2 and 5 inches (3.81 cm and 12.70 cm) will fall from the second chute 118 on top of the prior stone layer to form layer 7. Large rocks from the backfill can then be placed on top of the larger size stone layer 7 to form layer 9. Top soil may then be placed on the layer 9.

Although I have shown certain present preferred embodiments of my method and padding machine, it should be distinctly understood that the invention is not limited thereto, but may be variously embodied within the scope of the following claims.

## Claims

1. A method of filling a trench (1) after a structure (2) has been placed in the trench (1) and a padding material (4) has been deposited around the structure (2), the padding material (4) being a subsoil containing stones having a diameter of not more than 0.0381m (1 1/2 inches) and filling only a portion of the trench (1) **characterized by**:
a. applying a sheet of geotextile material (8) over the padding material (4), which sheet (8) permits water to pass through the sheet (8) while preventing passage of solids; and
b. applying spoil (5,7,9) over the sheet (8) to backfill the trench (1).

2. A method of filling a trench (1) comprising the steps of:
a. draping a sheet of geotextile material (8) over the sides and bottom of the trench (1), which sheet (8) permits water to pass through the sheet (8) while preventing passage of solids;
b. placing a structure (2) within the trench (1);
c. depositing a padding material (4) around the structure (2), the padding material (4) being a subsoil containing stones having a diameter of not more than 0.0381m (1 1/2 inches) and filling only a portion of the trench (1);
d. folding the sides of the sheet (8) over the padding material (4); and
e. applying spoil (5,7,9) over the sheet (8) to backfill the trench (1).

3. A method according to claim 1 or claim 2 in which the step of applying spoil (5,7,9) comprises:
a. separating the spoil (5,7,9) by particle size into two portions, the first portion (5) containing soil having particle sizes smaller than the second portion (7);
b. applying the first portion (5) of spoil over the sheet (8); and
c. applying the second portion (7) of spoil over the first portion (5) of spoil.

4. A method according to claim 3 wherein the first portion (5) of spoil contains particles having a diameter of from 0.0381m (1 1/2 inch) to 0.1270m (5 inch).

5. A method according to claim 1 or claim 2 in which the padding material (4) contains particles having a diameter of not more than 0.0159m (5/8 inches) and the step of applying spoil (5,7,9) comprises:
a. separating the spoil by particle size into a first portion (5) containing spoil having particle sizes of from 0.0159m (5/8 inches) to 0.0381m (1 1/2 inches), a second portion (7) containing spoil having particle sizes of from 0.0381m (1 1/2 inches) to 0.1270m (5 inches) and a third portion (9) containing spoil having particle sizes greater than 0.1270m (5 inches);
b. applying the first portion (5) of the spoil over the sheet (8);
c. applying the second portion (7) of spoil over the first portion of spoil (5);
d. applying the third portion (9) of spoil over the second portion (7); and
e. applying any remaining rock and subsoil spoil over the third portion (9).

6. An apparatus (18,60,94) for use in carrying out the method of claim 1 for placing a geotextile material (8) over padding material (4) surrounding a structure (2) in a trench (1) **characterized by**:
a. a frame (20, 61, 96) sized and configured to be attached to a carrier (70) which moves along one side of the trench (1) holding at least a portion of the frame (20,61,96) over the trench (1);
b. a supply (38,66,95) of geotextile material (8) which permits water to pass through the geotextile material (8) while preventing the passage of solids, the supply (38,66,95) being on the frame (20,61,96); and
c. a spreader (40,44,73,104) extending from the frame (61,96) and under which the geotextile material (8) passes as the geotextile material (8) is placed in the trench (1).

7. An apparatus according to claim 6 further comprising a leveller (69, 108) extending from the frame (61, 96).

8. An apparatus according to claim 7 further comprising at least one hydraulic cylinder (67,112) connected between the frame (61,96) and the leveller (69,108) for adjusting the height of the leveller (69,108).

9. An apparatus according to any of claims 6 to 8 wherein the supply of geotextile material (8) is a roll (66) of geotextile material (8) and a motor (75) is provided for unrolling the geotextile material (8) from the roll (66).

10. An apparatus according to any of claims 6 to 8 wherein a supply (95) of geotextile material (8) is a roll (95) of geotextile material (8) held by a shaft (100) and provided with a tensioner (102) for controlling the unrolling of the geotextile material (8) from the roll (95).

11. An apparatus according to any of claims 6 to 10 further comprising a first chute (32,116) for applying a first portion (5) of spoil over the geotextile material (8).

12. An apparatus according to claim 11 further comprising a second chute (30,118) for applying a second portion (7) of spoil over the first portion of spoil (5).

13. An apparatus according to any of claims 6 to 12 wherein the spreader (104) has a top surface (106) which prevents the spoil (5) from contacting the geotextile material (8) before the geotextile material (8) is placed in the trench (1).

14. An apparatus according to any of claims 6 to 13 wherein the spreader (104) is a sheet of flexible material attached to and extending from the frame (96).

## Patentansprüche

1. Verfahren zum Auffüllen eines Grabens (1), nachdem eine Struktur in den Graben (1) gesetzt und ein Polstermaterial (4) um die Struktur (2) herum gelegt wurde, wobei das Polstermaterial (4) ein Untergrund ist, der Steine mit einem Durchmesser von nicht mehr als 0,0381m (1 ½ Inch) enthält und nur einen Bereich des Grabens (1) füllt, **gekennzeichnet durch**
a) Aufbringen einer Bahn eines Geotextilmaterials (8) auf das Polstermaterial (4), wobei diese Bahn (8) erlaubt, dass Wasser **durch** die Bahn (8) dringt, während ein Eindringen von Feststoffen vermieden wird, und
b)Aufbringen von Erdaushubmaterial (5, 7, 9) auf die Bahn (8) zum Hinterfüllen des Grabens (1).

2. Verfahren zum Auffüllen eines Grabens (1) mit folgenden Schritten:
a) Drapieren einer Bahn eines Geotextilmaterials (8) auf den Seiten und der Unterseite des Grabens (1), wobei diese Bahn (8) erlaubt, dass Wasser durch die Bahn (8) dringt, während ein Eindringen von Feststoffen vermieden wird;
b) Einlegen einer Struktur (2) in den Graben (1);
c) Umhüllung der Struktur (2) mit einem Polstermaterial (4), wobei das Polstermaterial (4) ein Untergrund ist, der Steine mit einem Durchmesser von nicht mehr als 0,0381m (1 ½ Inch) enthält und nur einen Bereich des Grabens (1) füllt;
d) Umklappen der Seiten der Bahn (8) über das Polstermaterial (4); und
e) Aufbringen von Erdaushubmaterial (5, 7, 9) auf die Bahn (8) zum Hinterfüllen des Grabens (1).

3. Verfahren nach Anspruch 1 oder Anspruch 2, bei dem der Schritt des Aufbringens von Erdaushubmaterial (5, 7, 9) Folgendes umfasst:
a) Trennen des Erdaushubmaterials (5, 7, 9) nach Partikelgröße in zwei Teilmengen, wobei die erste Teilmenge (5) Erdaushubmaterial enthält, das kleinere Partikelgrößen hat als die zweite Teilmenge (7);
b) Aufbringen der ersten Teilmenge (5) des Erdaushubmaterials auf die Bahn (8); und
c) Aufbringen der zweiten Teilmenge (7) des Erdaushubmaterials auf die erste Teilmenge (5) des Erdaushubmaterials.

4. Verfahren nach Anspruch 3, bei dem die erste Teilmenge (5) des Erdaushubmaterials Partikel mit einem Durchmesser von 0,0381m (1 ½ Inch) bis 0,1270m (5 Inch) enthält.

5. Verfahren nach Anspruch 1 oder Anspruch 2, bei dem das Polstermaterial (4) Partikel mit einem Durchmesser von nicht mehr als 0,0159m (5/8 Inch) enthält und der Schritt des Aufbringens von Erdaushubmaterial (5, 7, 9) Folgendes umfasst:
a) Trennen des Erdaushubmaterials nach Partikelgröße in eine erste Teilmenge (5) von Erdaushubmaterial mit Partikelgrößen von 0,0159m (5/8 Inch) bis 0,0381m (1 ½ Inch), eine zweite Teilmenge (7) von Erdaushubmaterial mit Partikelgrößen von 0,0381m (1 ½ Inch) bis 0,1270m (5 Inch) und eine dritte Teilmenge (9) von Erdaushnbmaterial mit Partikelgrößen von mehr als 0,1270m (5 Inch);
b) Aufbringen der ersten Teilmenge (5) des Erdaushubmaterials auf die Bahn (8);
c) Aufbringen der zweiten Teilmenge (7) des Erdaushubmaterials auf die erste Teilmenge des Erdaushubmaterials (5);
d) Aufbringen der dritten Teilmenge (9) des Erdaushubmaterials auf die zweite Teilmenge (7); und
e) Aufbringen von jeglichem noch verbliebenen Gestein und Untergrundmaterial auf die dritte Teilmenge (9).

6. Vorrichtung (18, 60, 94) zur Verwendung bei der Durchführung des Verfahrens nach Anspruch 1, um ein Geotextilmaterial (8) auf ein Polstermaterial (4) zu legen, das eine Struktur (2) in einem Graben (1) umgibt, **gekennzeichnet durch**:
a) einen Rahmen (20, 61, 96) der so abgemessen und ausgeführt ist, dass er an einem Träger (70) befestigt werden kann, der sich entlang einer Seite des Grabens (1) bewegt und zumindest einen Teil des Rahmens (20, 61, 96) über den Graben (1) hält;
b) eine Zufuhreinrichtung (38, 66, 95) für Geotextilmaterial (8), das erlaubt, dass Wasser **durch** das Geotextilmaterial (8) dringt, während ein Eindringen von Feststoffen vermieden wird, wobei die Zufuhreinrichtung (38, 66, 95) sich an dem Rahmen (20, 61, 96) befindet; und
c) einen Ausbreiter (40, 44, 73, 104), der sich von dem Rahmen (61, 96) erstreckt und unter dem das Geotextilmaterial (8) hindurchläuft, wenn das Geotextilmaterial (8) in dem Graben (1) verlegt wird.

7. Vorrichtung nach Anspruch 6, die außerdem einen Planierer (69, 108) aufweist, der sich von dem Rahmen (61, 96) erstreckt.

8. Vorrichtung nach Anspruch 7, die außerdem mindestens einen Hydraulikzylinder (67, 112) aufweist, der zwischen dem Rahmen (61, 96) und dem Planierer (69, 108) angeordnet ist, um die Höhe des Planierers (69, 108) einzustellen.

9. Vorrichtung nach einem der Ansprüche 6 bis 8, bei der die Zufuhreinrichtung für das Geotextilmaterial (8) eine Rolle (66) des Geotextilmaterials (8) ist und ein Motor (75) zum Abrollen des Geotextilmaterials (8) von der Rolle (66) vorgesehen ist.

10. Vorrichtung nach einem der Ansprüche 6 bis 8, bei der eine Zufuhreinrichtung (95) für das Geotextilmaterial (8) eine Rolle (95) des Geotextilmaterials (8) ist, die von einer Welle (100) gehalten wird und mit einer Spannvorrichtung (102) versehen ist, um das Abrollen des Geotextilmaterials (8) von der Rolle (95) zu kontrollieren.

11. Vorrichtung nach einem der Ansprüche 6 bis 10, die außerdem eine erste Rutsche (32, 116) aufweist, um eine erste Teilmenge (5) von Erdaushubmaterial auf das Geotextilmaterial (8) aufzubringen.

12. Vorrichtung nach Anspruch 11, die außerdem eine zweite Rutsche (30, 118) aufweist, um eine zweite Teilmenge (7) von Erdaushubmaterial auf die erste Teilmenge von Erdaushubmaterial (5) aufzubringen.

13. Vorrichtung nach einem der Ansprüche 6 bis 12, bei der der Ausbreiter (104) eine obere Fläche (106) aufweist, die verhindert, dass das Erdaushubmaterial (5) mit dem Geotextilmaterial (8) in Kontakt kommt, bevor das Geotextilmaterial (8) in dem Graben (1) verlegt wird.

14. Vorrichtung nach einem der Ansprüche 6 bis 13, bei der der Ausbreiter (104) eine Bahn eines flexiblen Materials ist, die an dem Rahmen (96) befestigt ist und sich von diesem erstreckt.

## Revendications

1. Procédé de remplissage d'une tranchée (1) après qu'une structure (2) ait été disposée dans la tranchée (1) et qu'un matériau de remplissage (4) ait été déposé autour de la structure (2), le matériau de remplissage (4) étant un sous-sol contenant des pierres ayant un diamètre qui n'est pas supérieur à 0,0381 m (1 pouce 1/2) et remplissant une partie seulement de la tranchée (1), **caractérisé par** les étapes consistant à :
a. appliquer une feuille de matériau géotextile (8) sur le matériau de remplissage (4), cette feuille (8) permettant à l'eau de traverser la feuille (8) tout en empêchant le passage des solides ; et
b. appliquer des déblais (5, 7, 9) sur la feuille (8) pour remblayer la tranchée (1).

2. Procédé de remplissage d'une tranchée (1) comprenant les étapes consistant à :
a. draper une feuille de matériau géotextile (8) sur les côtés et le fond de la tranchée (1), cette feuille (8) permettant à l'eau de traverser la feuille (8) tout en empêchant le passage de solides ;
b. disposer une structure (2) à l'intérieur de la tranchée (1) ;
c. déposer un matériau de remplissage (4) autour de la structure (2), le matériau de remplissage étant un sous-sol contenant des pierres ayant un diamètre qui n'est pas supérieur à 0,0381 m (1 pouce 1/2) et ne remplisant qu'une partie de la tranchée (1) ;
d. plier les côtés de la feuille (8) sur le matériau de remplissage (4) ; et
e. appliquer des déblais (5, 7, 9) sur la feuille (8) pour remblayer la tranchée (1).

3. Procédé selon la revendication 1 ou la revendication 2, dans lequel l'étape consistant à appliquer des déblais (5, 7, 9) comprend les étapes consistant à :
a. séparer les déblais (5, 7, 9) par tailles de particules en deux parties, la première partie (5) contenant du sol ayant des tailles de particules inférieures à celles de la deuxième partie (7) ;
b. appliquer la première partie (5) de déblais sur la feuille (8) ; et
c. appliquer la deuxième partie (7) de déblais sur la première partie (5) de déblais.

4. Procédé selon la revendication 3, dans lequel la première partie (5) de déblais contient des particules ayant un diamètre compris entre 0,0381 m (1 pouce 1/2) et 0,1270 m (5 pouces).

5. Procédé selon la revendication 1 ou la revendication 2, dans lequel le matériau de remplissage (4) contient des particules ayant un diamètre qui n'est pas supérieur à 0,0159 m (5/8 pouce), et l'étape d'application de déblais (5, 7, 9) comprend les étapes consistant à :
a. séparer les déblais par tailles de particules en une première partie (5) contenant des déblais ayant des tailles de particules comprises entre 0,0159 m (5/8 pouce) et 0,0381 m (1 pouce 1/2), une deuxième partie (7) contenant des déblais ayant des tailles de particules comprises entre 0,0381 m (1 pouce 1/2) et 0,1270 m (5 pouces) et une troisième partie (9) contenant des déblais ayant des tailles de particules supérieures à 0,1270 m (5 pouces) ;
b. appliquer la première partie (5) des déblais sur la feuille (8) ;
c. appliquer la deuxième partie (7) de déblais sur la première partie de déblais (5) ;
d. appliquer la troisième partie (9) de déblais sur la deuxième partie (7) ; et
e. appliquer toute pierre et déblais de sous-sol restants sur la troisième partie (9).

6. Dispositif (18, 60, 94) destiné à être utilisé pour mettre en oeuvre le procédé selon la revendication 1 pour disposer un matériau géotextile (8) sur un matériau de remplissage (4) entourant une structure (2) dans une tranchée (1), **caractérisé par** :
a. un châssis (20, 61, 96) dimensionné et configuré pour être fixé à un support (70) qui se déplace le long d'un côté de la tranchée (1), maintenant au. moins une partie du châssis (20, 61, 96) au-dessus de la tranchée (1) ;
b. une alimentation (38, 66, 95) de matériau géotextile (8) qui permet à l'eau de traverser le matériau géotextile (8) tout en empêchant le passage de solides, l'alimentation (38, 66, 95) se trouvant sur le châssis (20, 61, 96) ; et
c. un dispositif d'étalement (40, 44, 73, 104) s'étendant à partir du châssis (61, 96) et sous lequel le matériau géotextile (8) passe lorsque le matériau géotextile (8) est disposé dans la tranchée (1).

7. Dispositif selon la revendication 6, comprenant de plus un dispositif de mise à niveau (69, 108) s'étendant à partir du châssis (61, 96).

8. Dispositif selon la revendication 7, comprenant de plus au moins un vérin hydraulique (67, 112) raccordé entre le châssis (61, 96) et le dispositif de mise à niveau (69, 108) pour régler la hauteur du dispositif de mise à niveau (69, 108).

9. Dispositif selon l'une quelconque des revendications 6 à 8, dans lequel l'alimentation de matériau géotextile (8) est un rouleau (66) de matériau géotextile (8), et un moteur (75) est présent pour dérouler le matériau géotextile (8) à partir du rouleau (66).

10. Dispositif selon l'une quelconque des revendications 6 à 8, dans lequel une alimentation (95) de matériau géotextile (8) est un rouleau (95) de matériau géotextile (8) maintenu par un arbre (100) et muni d'un tendeur (102) pour contrôler le déroulage du matériau géotextile (8) à partir du rouleau (95).

11. Dispositif selon l'une quelconque des revendications 6 à 10, comprenant de plus une première goulotte (32, 116) pour appliquer une première partie (5) de déblais sur le matériau géotextile (8).

12. Dispositif selon la revendication 11, comprenant de plus une deuxième goulotte (30, 118) pour appliquer une deuxième partie (7) de déblais sur la première partie de déblais (5).

13. Dispositif selon l'une quelconque des revendications 6 à 12, dans lequel le dispositif d'étalement (104) comporte une surface supérieure (106) qui empêche les déblais (5) de venir en contact avec le matériau géotextile (8) avant que le matériau géotextile (8) n'ait été disposé dans la tranchée (1).

14. Dispositif selon l'une quelconque des revendications 6 à 13, dans lequel le dispositif d'étalement (104) est une feuille de matériau flexible fixée au châssis (96) et s'étendant à partir de celui-ci.
